# EUROPEAN PATENT APPLICATION

(11) **EP 4 618 242 A1**
(43) Date of publication of application: **17.09.2025**
(21) Application number: 24197948.3
(22) Date of filing: 02.09.2024
(51) Int. Cl.: H01M 10/613, H01M 10/647, H01M 10/6554, H01M 10/6557, H01M 10/6568, H01M 50/209

(54) **COOLING PLATE AND BATTERY MODULE HAVING THE SAME**

(30) Priority: 12.03.2024 KR 20240034418
(71) Applicant: SAMSUNG SDI CO., LTD., Yongin-si, Gyeonggi-do 17084 (KR)
(72) Inventor: SONG, In Hyeok, 16678 Suwon-si (KR)
(74) Representative: Marks & Clerk LLP

(57) **Abstract**

A cooling plate includes: a cooling body; a cooling channel inside the cooling body and configured to guide a flow of a coolant; and a dispersion member inside the cooling channel and configured to disperse the flow of the coolant through the cooling channel.

## Description

### BACKGROUND

### 1. Field

Aspects of some embodiments of the present disclosure relate to a cooling plate and a battery module having the same.

### 2. Discussion of Related Art

In general, as the demand for portable electronic products such as laptops, video cameras, and portable phones rapidly increases and robots, electric vehicles, and the like are commercialized in earnest, research on high-performance secondary batteries capable of repeated charging and discharging is actively underway.

Secondary batteries may be used for driving or storing energy in small devices such as portable electronic devices, as well as medium to large-sized devices such as electric vehicles and energy storage systems (ESS). In particular, in the case of medium to large-sized devices, one battery module may include a plurality of battery cells electrically connected to each other to relatively improve power and/or capacity of a battery.

The operation of the battery module may be affected by the temperature of a surrounding environment, and the heat generated by the battery module during charging and discharging may contribute to relatively lowering the performance and efficiency of the battery module.

The above information disclosed in this Background section is only for enhancement of understanding of the background and therefore the information discussed in this Background section does not necessarily constitute prior art.

### SUMMARY

Aspects of some embodiments may include an efficient thermal management system that may be capable of maintaining and relatively improving the performance of a battery module.

Aspects of some embodiments of the present disclosure include a cooling plate capable of efficiently cooling battery cells and a battery module having the same.

These and other aspects and characteristics of some embodiments of the present disclosure will be described in or will be apparent from the following description of some embodiments of the present disclosure.

According to some embodiments of the present disclosure, a cooling plate includes a cooling body, a cooling channel inside the cooling body and configured to guide a flow of a coolant, and a dispersion member inside the cooling channel and configured to disperse the flow of the coolant through the cooling channel.

According to some embodiments, the cooling channel may include a first channel configured to guide the flow of the coolant in a first direction, a second channel spaced apart from the first channel and configured to guide the flow of the coolant in a second direction different from the first direction, and a third channel connected to the first channel and the second channel and configured to change the flow of the coolant from the first direction to the second direction.

According to some embodiments, the cooling body may include a first land portion protruding inside the first channel and extending in the first direction and a second land portion protruding inside the second channel and extending in the second direction.

According to some embodiments, the first land portion may be arranged so that an end thereof faces a first port that supplies the coolant to the first channel, and the second land portion may be arranged so that an end thereof faces a second port that discharges the coolant from the second channel.

According to some embodiments, the cooling plate may further include a partition wall between the first channel and the second channel and dividing the first channel and the second channel.

According to some embodiments, the third channel may extend in a direction intersecting the first direction and the second direction.

According to some embodiments, the third channel may face an end of the partition wall.

According to some embodiments, the dispersion member may include a plurality of main dimples protruding toward the cooling channel from any one of a bottom surface and a ceiling surface of the cooling body.

According to some embodiments, ends of the main dimples may be in contact with a remaining one of the bottom surface and the ceiling surface of the cooling body.

According to some embodiments, a cross-sectional area of the main dimple may decrease toward the end.

According to some embodiments, a maximum width of the main dimple may be 12 mm or more and 18 mm or less.

According to some embodiments, the plurality of main dimples may be in a plurality of columns in an extension direction of the cooling channel.

According to some embodiments, the main dimples in neighboring columns in the extension direction of the cooling channel may be offset in a direction intersecting the extension direction of the cooling channel.

According to some embodiments, the dispersion member may further include a side dimple protruding from a side surface of the cooling body toward the cooling channel.

According to some embodiments, the side dimple may include a first side dimple protruding from the side surface of the cooling body toward the first channel, a second side dimple protruding from the side surface of the cooling body toward the second channel, and a third side dimple protruding from the side surface of the cooling body toward the third channel.

According to some embodiments, a width of the third channel may be narrower than widths of the first channel and the second channel, and a cross-sectional area of the third side dimple may be smaller than cross-sectional areas of the first side dimple and the second side dimple.

According to some embodiments of the present disclosure, a battery module includes a plurality of battery cells, a housing surrounding the battery cells, a cooling plate including a cooling body between the housing and the battery cells, a cooling channel guiding a flow of a coolant inside the cooling body, and a dispersion member inside the cooling channel and configured to disperse the flow of the coolant through the cooling channel, and an insulating member that electrically insulates the housing and the battery cells.

According to some embodiments, the plurality of battery cells may include a plurality of first battery cells arranged in a first direction and a plurality of second battery cells spaced apart from the first battery cells and arranged in a second direction different from the first direction, and the cooling channel may include a first channel configured to guide the flow of the coolant in the first direction and facing the first battery cells, a second channel configured to guide the flow of the coolant in the second direction and facing the second battery cells, and a third channel connected to the first channel and the second channel and configured to change the flow of the coolant from the first direction to the second direction.

According to some embodiments, the insulating member may include an insulating body between the battery cells and the cooling plate and a support member extending from the insulating body and supporting the insulating body with respect to the housing.

According to some embodiments, an area of the cooling body facing the battery cells may be smaller than a sum of areas of the plurality of battery cells facing the cooling body, and the support member may be in contact with the housing.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically showing a configuration of a battery module according to some embodiments of the present disclosure;
FIG. 2 is a perspective view schematically showing an installed state of a cooling plate according to some embodiments of the present disclosure;
FIG. 3 is a perspective view schematically showing a configuration of the cooling plate according to some embodiments of the present disclosure;
FIG. 4 is a plan view schematically showing the configuration of the cooling plate according to some embodiments of the present disclosure;
FIG. 5 is a cross-sectional view schematically showing the configuration of the cooling plate according to some embodiments of the present disclosure;
FIG. 6 is an enlarged view schematically showing a configuration of a main dimple according to some embodiments of the present disclosure;
FIG. 7 is an enlarged view schematically showing a configuration of a side dimple according to some embodiments of the present disclosure;
FIG. 8 is a view schematically showing an operating state of the cooling plate according to some embodiments of the present disclosure;
FIG. 9 is a view showing results of simulating the operating state of the cooling plate according to some embodiments of the present disclosure using a computational fluid dynamics technique; and
FIG. 10 is a cross-sectional view schematically showing a configuration of an insulating member according to some embodiments of the present disclosure.

### DETAILED DESCRIPTION

Herein, aspects of some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing aspects of some embodiments of the present disclosure and are not intended to limit embodiments of the present disclosure.

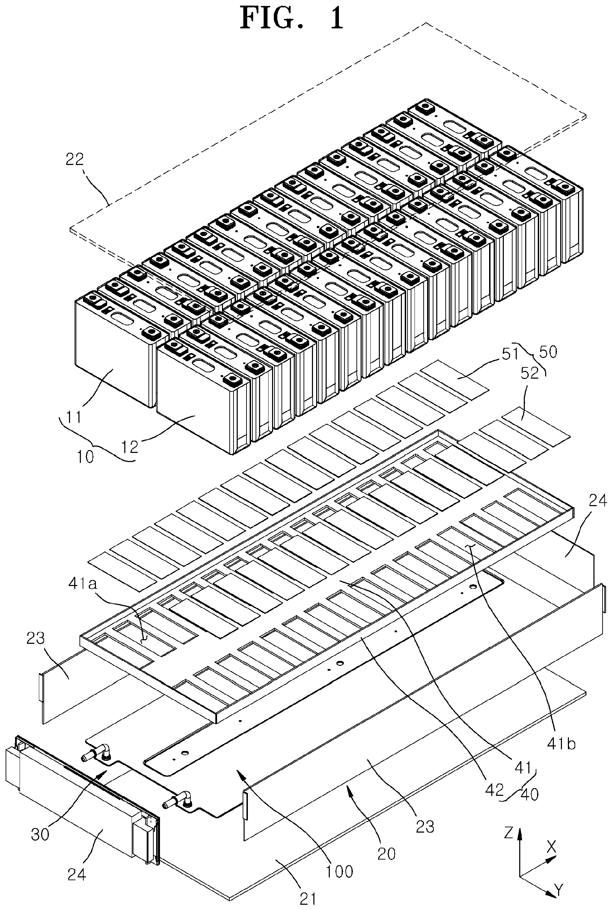

FIG. 1 is a perspective view schematically showing a configuration of a battery module according to some embodiments of the present disclosure.

Referring to FIG. 1, the battery module according to some embodiments includes a battery cell 10, a housing 20, a cooling plate 30, and an insulating member 40.

The battery cell 10 functions as a unit structure that stores and supplies electric power through charging and discharging operations. A plurality of battery cells 10 may be provided and electrically connected to each other.

The plurality of battery cells 10 according to some embodiments may include a plurality of first battery cells 11 and a plurality of second battery cells 12.

According to some embodiments, the first battery cell 11 and the second battery cell 12 may be illustrated as prismatic secondary cells capable of charging and discharging with a preset amount of electric power by including an electrode assembly in which a positive electrode plate and a negative electrode plate are arranged on both sides of a separator interposed therebetween. The first battery cell 11 and the second battery cell 12 may be formed to have the same shape and size.

The plurality of first battery cells 11 may be arranged in a plurality of columns in a first direction. Here, the first direction may be any one direction parallel to an X axis based on FIG. 1.

The plurality of second battery cells 12 may be arranged in a plurality of columns in a second direction different from the first direction. Here, the second direction may be a direction parallel to the first direction and opposite to the first direction.

One of the first battery cells 11 may be arranged to face one of the second battery cells 12 in a direction intersecting the first direction. For example, as shown in FIG. 1, each first battery cell 11 may be arranged so that a side surface thereof faces a side surface of a different second battery cell 12 in a direction parallel to a Y axis based on FIG. 1.

The housing 20 is arranged to surround the battery cells 10. That is, the housing 20 may function as a component that protects the battery cells 10 from external shocks and foreign substances and binds a plurality of battery cells 10 into one module unit.

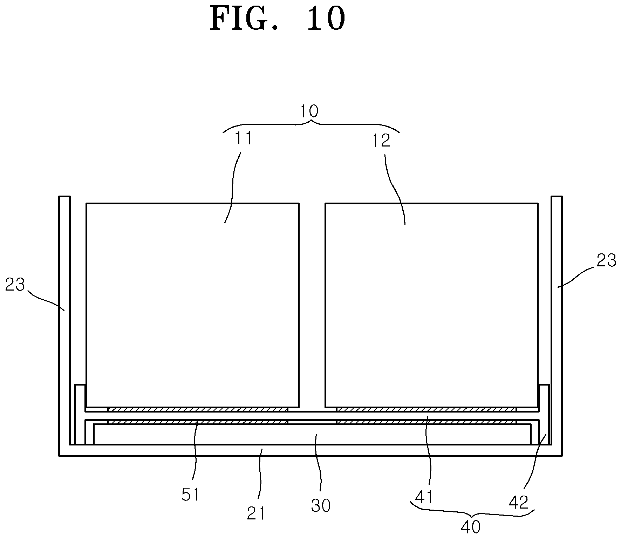

The housing 20 according to some embodiments may include a bottom plate 21 (see Fig. 10) arranged to face lower surfaces of the first battery cells 11 and the second battery cells 12, a top plate 22 arranged to face upper surfaces of the first battery cells 11 and the second battery cells 12, a pair of side plates 23 arranged to face side surfaces of the first battery cells 11 and the second battery cells 12, respectively, and a pair of end plates 24 arranged to face front and back surfaces of the first battery cells 11 and the second battery cells 12, respectively.

The cooling plate 30 is located between the housing 20 and the battery cells 10 and cools the battery cells 10. For example, the cooling plate 30 may function as a component that cools the battery cells 10 by heat exchange between the coolant supplied from the outside and the battery cells 10. Here, the coolant may include various types of liquid refrigerants capable of performing heat exchange with the battery cells 10 in addition to water.

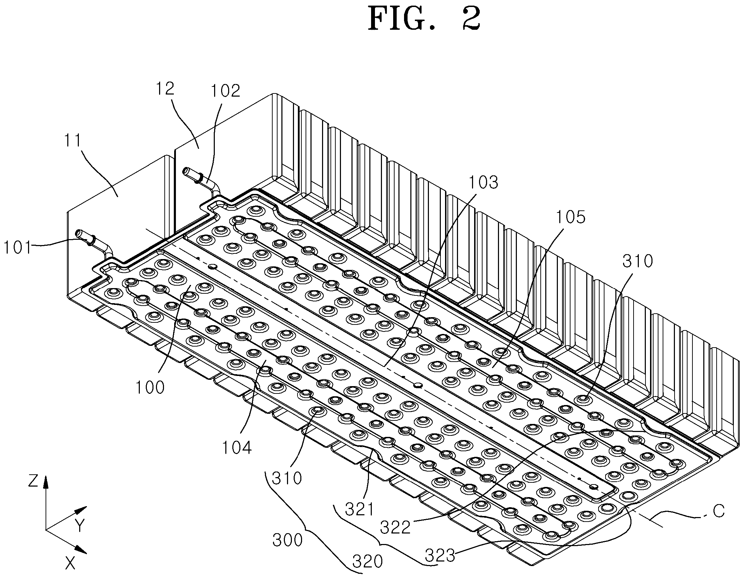

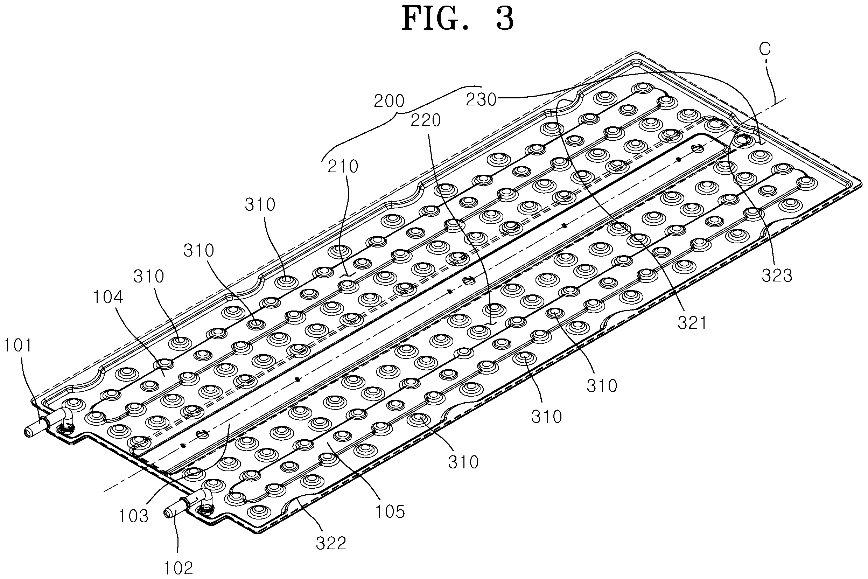

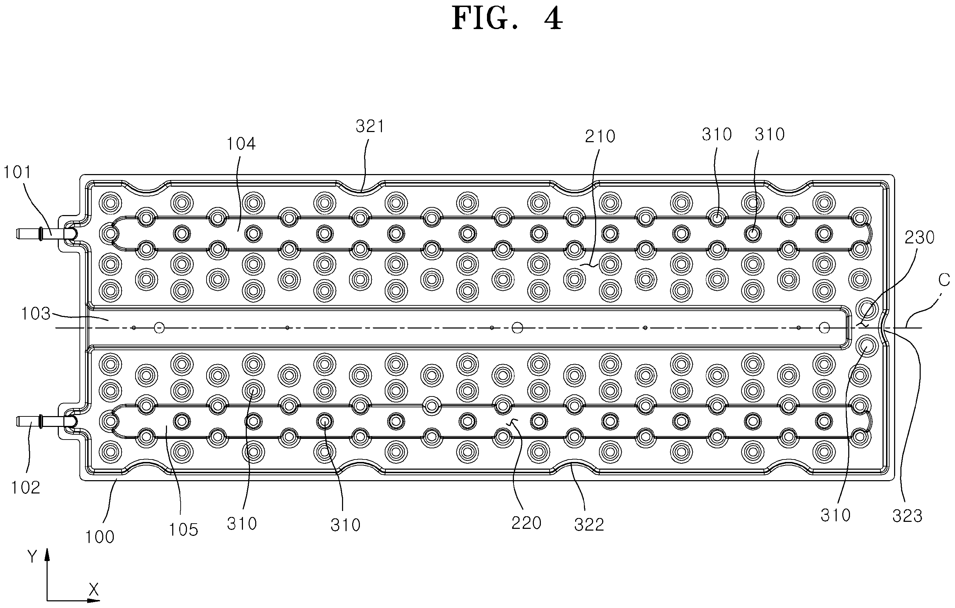

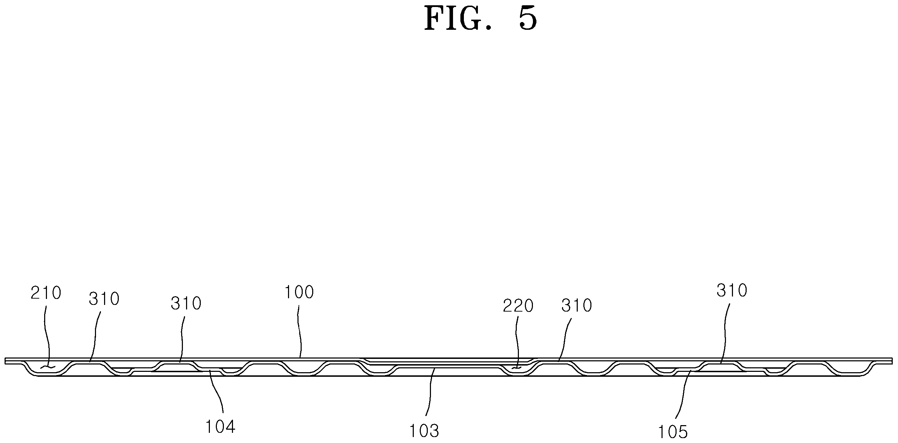

FIG. 2 is a perspective view schematically showing an installed state of a cooling plate according to some embodiments of the present disclosure, FIG. 3 is a perspective view schematically showing a configuration of the cooling plate according to some embodiments of the present disclosure, FIG. 4 is a plan view schematically showing the configuration of the cooling plate according to some embodiments of the present disclosure, and FIG. 5 is a cross-sectional view schematically showing the configuration of the cooling plate according to some embodiments of the present disclosure.

Referring to FIGS. 2 to 5, a cooling plate 30 according to some embodiments may include a cooling body 100, a cooling channel 200, and a dispersion member 300.

The cooling body 100 forms a schematic appearance of the cooling plate 30. The cooling body 100 according to some embodiments may be formed to have a substantially flat shape. The cooling body 100 may be made of a metal material such as aluminum with high thermal conductivity or the like. The cooling body 100 may be located between the lower surfaces of the battery cells 10 and the bottom plate 21. The cooling body 100 may be arranged so that a longitudinal direction thereof is the first direction, that is, in parallel to an X-axis direction based on FIG. 1 and a width direction thereof is in parallel to a Y-axis direction.

The cooling body 100 may be arranged so that an upper surface thereof faces the lower surfaces of the battery cells 10. For example, as shown in FIG. 2, the cooling body 100 may be arranged so that a center line C of the cooling body 100 faces a boundary region between the first battery cells 11 and the second battery cells 12. An upper surface of the cooling body 100 may be arranged so that both sides in the width direction based on the center line C face the lower surfaces of the first battery cells 11 and the lower surfaces of the second battery cells 12, respectively. The upper surface of the cooling body 100 may be in direct contact with the lower surfaces of the first battery cells 11 and the lower surfaces of the second battery cells 12, and may be in indirect contact with the lower surfaces of the first battery cells 11 and the lower surfaces of the second battery cells 12 through a separate sheet 50 or the like, as will be described below.

A lower surface of the cooling body 100 may be arranged to face an upper surface of the bottom plate 21. The cooling body 100 may be integrally coupled to the upper surface of the bottom plate 21 by welding or the like, and may also be detachably assembled to the upper surface of the bottom plate 21 by insertion coupling or the like.

An area of the cooling body 100 facing the battery cells 10 may be smaller than the sum of areas of the plurality of battery cells 10 facing the cooling body 100. As the center line C of the cooling body 100 is arranged to face the boundary region of the first battery cells 11 and the second battery cells 12, ends of the first battery cells 11 and the second battery cells 12 may protrude on both sides of the cooling body 100 in the width direction, respectively. Accordingly, the cooling body 100 may provide a space between the battery cells 10 and the bottom plate 21 where the insulating member 40, which will be described below, may be supported.

The cooling channel 200 is located inside the cooling body 100 and guides the flow of the coolant within the cooling body 100. That is, the cooling channel 200 may function as a component that forms a circulation path for coolant inside the cooling body 100.

The cooling channel 200 according to some embodiments may include a first channel 210, a second channel 220, and a third channel 230.

The first channel 210 and the second channel 220 guide the flow of the coolant in the first direction and the second direction, respectively, inside the cooling channel 200. The first channel 210 and the second channel 220 according to some embodiments may be an empty space formed inside the cooling channel 200. The first channel 210 and the second channel 220 may be arranged so that longitudinal directions thereof are parallel to the first and second directions, respectively. Since the first direction and the second direction are parallel to each other, the first channel 210 and the second channel 220 may be arranged parallel to each other in a longitudinal direction of the cooling body 100.

The first channel 210 and the second channel 220 may be arranged to be spaced apart from each other in a width direction of the cooling body 100. The first channel 210 and the second channel 220 may be arranged symmetrically with respect to the center line C of the cooling body 100. As the center line C of the cooling body 100 is arranged to face the boundary region of the first battery cells 11 and the second battery cells 12, the first channel 210 may be arranged to face the lower surfaces of the first battery cells 11, and the second channel 220 may be arranged to face the lowers surfaces of the second battery cells 12.

As the first direction and the second direction are opposite to each other, a front end of the first channel 210 and a rear end of the second channel 220 may be arranged to face each other in the width direction of the cooling body 100, and a rear end of the first channel 210 and a front end of the second channel 220 may be arranged to face each other in the width direction of the cooling body 100.

The first channel 210 may receive the coolant through a first port 101. The first port 101 according to some embodiments may be formed to have a hollow inside and have both ends that are open in the form of a pipe, a nipple, or the like. The first port 101 may be located outside the cooling body 100. One end of the first port 101 may pass through the cooling body 100 and be connected to the front end of the first channel 210. The first port 101 may be fixed to the upper surface of the cooling body 100 as shown in FIG. 3, and alternatively, the first port 101 may be fixed to the lower surface or end surface of the cooling body 100. The other end of the first port 101 may be connected to a heat exchanger installed on the outside of the battery module, and may receive a coolant whose temperature has been relatively reduced through the heat exchanger. The diameter of the first port 101 may be 8 mm or more and 10 mm or less.

The second channel 220 may discharge the coolant to the outside of the cooling body 100 through the second port 102. The second port 102 according to some embodiments may be formed to have a hollow inside and have both ends that are open in the form of a pipe, a nipple, or the like. The second port 102 may be located outside the cooling body 100. One end of the second port 102 may pass through the cooling body 100 and be connected to the rear end of the second channel 220. Accordingly, the first port 101 and the second port 102 may be arranged to face each other in the width direction of the cooling body 100 at the end side of the cooling body 100. The second port 102 may be fixed to the upper surface of the cooling body 100 as shown in FIG. 3, and alternatively, the second port 102 may be fixed to the lower surface or end surface of the cooling body 100. The other end of the second port 102 may be connected to the heat exchanger installed on the outside of the battery module, and may transfer a coolant whose temperature is increased while circulating through the first channel 210 and the second channel 220 to the heat exchanger. The diameter of the second port 102 may be 8 mm or more and 10 mm or less.

A partition wall 103 for partitioning the first channel 210 and the second channel 220 may be located between the first channel 210 and the second channel 220. That is, the partition wall 103 may function as a structure that separates coolant flow spaces formed in the first channel 210 and the second channel 220 from each other. Accordingly, the partition wall 103 may prevent the coolant from flowing out from the first channel 210 to the second channel 220 or flowing out from the second channel 220 to the first channel 210 without passing through the third channel 230.

The partition wall 103 may protrude from a bottom surface of the cooling body 100 toward a ceiling surface. An upper end of the partition wall 103 may be in contact with the ceiling surface of the cooling body 100. Here, the bottom surface and the ceiling surface of the cooling body 100 may refer to different inner surfaces of the cooling body 100 that are in contact with lower and upper surfaces of the cooling channel 200, respectively. Accordingly, the partition wall 103 may completely seal the space between the first channel 210 and the second channel 220. The partition wall 103 may be formed by press working. The partition wall 103 may be formed to become narrower toward the end thereof. Accordingly, the partition wall 103 may be easily separated from the die during press working.

The partition wall 103 may be arranged so that a longitudinal direction thereof is parallel to the longitudinal direction of the cooling body 100. A length of the partition wall 103 may be shorter than lengths of the first channel 210 and the second channel 220. A center line of the partition wall 103 may coincide with the center line C of the cooling body 100.

A first land portion 104 protruding inside the first channel 210 may be formed in the cooling body 100. The first land portion 104 according to some embodiments may protrude from the bottom surface of the cooling body 100 toward the inside of the first channel 210. The first land portion 104 may be arranged so that an upper end thereof is spaced apart from the ceiling surface of the cooling body 100 by a distance (e.g., a set or predetermined distance). The first land portion 104 may be arranged so that both side surfaces face side surfaces of the partition wall 103 and the cooling body 100, respectively. The first land portion 104 may extend in a longitudinal direction along the first direction. One end of the first land portion 104 may be arranged to face the first port 101. Accordingly, the first land portion 104 may form a flow area in the region facing the first port 101 in the total flow area of the first channel 210 to be smaller than the flow area in the remaining region, thereby preventing the coolant supplied to the first channel 210 from concentrating on the region facing the first port 101 due to supply pressure and leading the coolant to be dispersed in a width direction of the first channel 210.

A second land portion 105 protruding inside the second channel 220 may be formed in the cooling body 100. The second land portion 105 according to some embodiments may protrude from the bottom surface of the cooling body 100 toward the inside of the second channel 220. The second land portion 105 may be arranged so that an upper end thereof is spaced apart from the ceiling surface of the cooling body 100 by a distance (e.g., a set or predetermined distance). The second land portion 105 may be arranged so that both side surfaces face side surfaces of the partition wall 103 and the cooling body 100, respectively. The second land portion 105 may extend in a longitudinal direction along the second direction. One end of the second land portion 105 may be arranged to face the second port 102. Accordingly, the second land portion 105 may form a flow area in the region facing the second port 102 in the total flow area of the second channel 220 to be smaller than the flow area in the remaining region, thereby preventing the coolant discharged from the second channel 220 from concentrating on the region facing the second port 102 due to suction pressure and leading the coolant to be dispersed in a width direction of the second channel 220.

In the above, the partition wall 103, the first land portion 104, and the second land portion 105 have been described as protruding from the bottom surface of the cooling body 100 toward the ceiling surface by way of example, but the partition wall 103, the first land portion 104, and the second land portion 105 are not limited thereto, and may also protrude from the ceiling surface of the cooling body 100 toward the bottom surface.

The third channel 230 is connected to the first channel 210 and the second channel 220, and changes the flow of the coolant from the first direction to the second direction. That is, the third channel 230 may function as a component that transfers the coolant that has passed through the first channel 210 to the second channel 220. Accordingly, the third channel 230 may lead a coolant to circulate throughout the entire area of the cooling body 100 with only one coolant supply.

The third channel 230 according to some embodiments may be an empty space formed inside the cooling body 100. The third channel 230 may extend in a direction intersecting the first direction and the second direction. That is, the third channel 230 may be arranged so that a longitudinal direction thereof is parallel to the width direction of the cooling body 100. Both ends of the third channel 230 may be connected to the first channel 210 and the second channel 220, respectively. The third channel 230 may be arranged to face an end of the partition wall 103. In this case, both ends of the third channel 230 may be connected to the rear end of the first channel 210 and the front end of the second channel 220, respectively.

A width of the third channel 230 may be narrower than widths of the first channel 210 and the second channel 220. Accordingly, the third channel 230 may cause the coolant to flow faster than the first channel 210 and the second channel 220, thereby leading the coolant to more quickly change the flow direction.

The dispersion member 300 is located inside the cooling channel 200 and disperses the flow of the coolant through the cooling channel 200. For example, the dispersion member 300 may function as a component that disperses the flow of the coolant in a direction intersecting an extension direction of the cooling channel 200 and leads the coolant to a continuous mixing action. Accordingly, the cooling plate 30 may secure uniform cooling performance over the entire area facing the battery cells 10 and prevent temperature deviation between the plurality of battery cells 10.

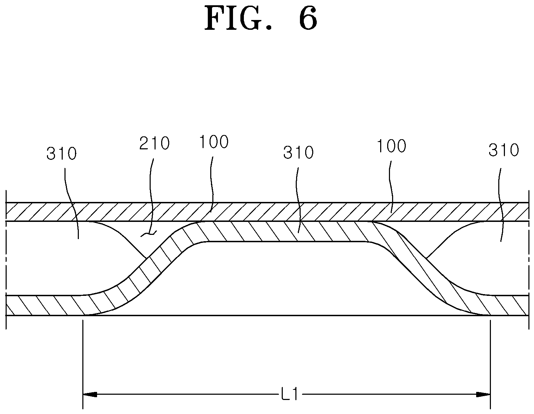

FIG. 6 is an enlarged view schematically showing a configuration of a main dimple according to some embodiments of the present disclosure.

Referring to FIGS. 3 to 6, the dispersion member 300 according to some embodiments may include a main dimple 310.

The main dimple 310 functions as a component that disperses the flow of the coolant to both sides as the main dimple 310 comes into contact with the coolant inside the cooling channel 200. The main dimple 310 according to some embodiments may protrude from the bottom surface of the cooling body 100 toward the cooling channel 200. The main dimple 310 may be formed by press working. The main dimple 310 may be formed to become narrower toward an end thereof. Accordingly, the main dimple 310 may be easily separated from the die during press working. An upper end of the main dimple 310 may be in contact with the ceiling surface of the cooling body 100. The surface of the main dimple 310 may have a curved shape. Accordingly, when the main dimple 310 comes into contact with the coolant, the main dimple 310 may lead the coolant to smoothly flow along the surface, thereby preventing the flow velocity of the coolant from rapidly decreasing.

Hereinafter, as shown in FIGS. 3 to 6, a cross section of the main dimple 310 perpendicular to a Z axis will be described as having a circular shape by way of example. However, the main dimple 310 is not limited thereto, and the cross section perpendicular to the Z axis may have a polygonal, oval, or irregular shape.

A maximum width L1 of the main dimple 310 may be 12 mm or more and 18 mm or less. Here, the maximum width L1 of the main dimple 310 may refer to the largest width among the widths of the main dimple 310 parallel to the Y-axis direction perpendicular to the first direction and the second direction. According to some embodiments, the maximum width of the main dimple 310 may refer to the width of the main dimple 310 on the bottom surface of the cooling body 100, as shown in FIG. 6. When the cross section of the main dimple 310 perpendicular to the Z axis has a circular cross section, the radius of the main dimple 310 may be 6 mm or more and 9 mm or less. When the maximum width L1 of the main dimple 310 is less than 12 mm, eddy current generation performance may decrease and thus heat exchange efficiency may decrease. When the maximum width L1 of the main dimple 310 is greater than 18 mm, the flow velocity may excessively decrease due to an increase in the geometric friction length, which may relatively reduce heat exchange efficiency.

A plurality of main dimples 310 may be provided. The plurality of main dimples 310 may be arranged in a plurality of columns in the extension direction of the cooling channel 200. For example, the plurality of main dimples 310 may be arranged in a plurality of columns in longitudinal directions of the first channel 210, the second channel 220, and the third channel 230. At the same time, the plurality of main dimples 310 may be arranged in a plurality of rows in the direction intersecting the extension direction of the cooling channel 200. That is, the plurality of main dimples 310 may be arranged in a plurality of rows in width directions of the first channel 210, the second channel 220, and the third channel 230.

A pair of main dimples 310 arranged in neighboring columns in the extension direction of the cooling channel 200 may be arranged to be offset in the direction intersecting the extension direction of the cooling channel. For example, any one main dimple 310 arranged in any one of neighboring columns in the longitudinal direction of the first channel 210 may be arranged to face a region between any one pair of main dimples 310 arranged in the width direction of the first channel 210 in the remaining one of the neighboring columns in the longitudinal direction of the first channel 210. In addition, any one main dimple 310 arranged in any one of neighboring columns in the longitudinal direction of the second channel 220 may be arranged to face a region between any one pair of main dimples 310 arranged in the width direction of the second channel 220 in the remaining one of the neighboring columns in the longitudinal direction of the second channel 220. Accordingly, the plurality of main dimples 310 may further improve the dispersion efficiency of the coolant.

As described above, the main dimple 310 has been described as protruding from the bottom surface of the cooling body 100 toward the ceiling surface by way of example, but the main dimple 310 is not limited thereto and may also protrude from the ceiling surface of the cooling body 100 toward the bottom surface.

The dispersion member 300 according to some embodiments may further include a side dimple 320.

The side dimples 320 may protrude from the side surface of the cooling body 100 toward the cooling channel 200, that is, the side dimple 320 may function as a component that disperses the flow of the coolant positioned at the interface between the cooling channel 200 and the cooling body 100. Accordingly, the side dimple 320 may prevent the coolant flowing through the cooling channel 200 from concentrating on the side region of the cooling body 100 due to a centrifugal force or the like.

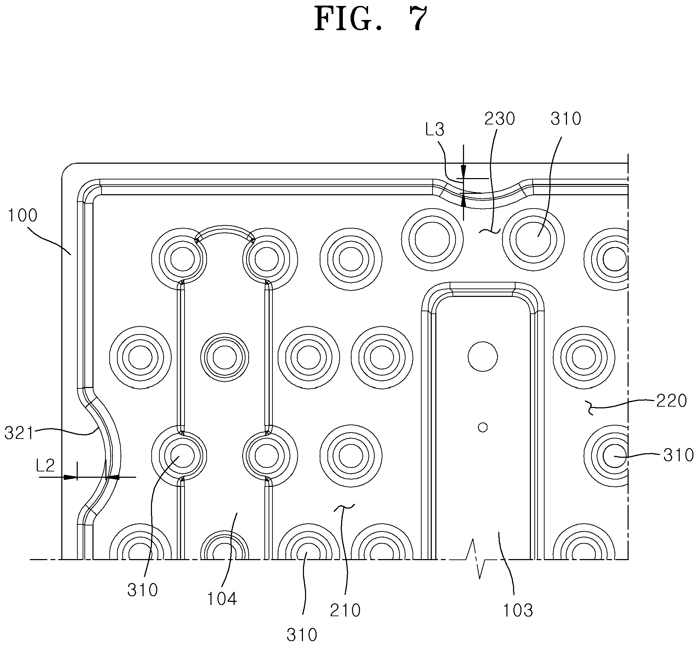

FIG. 7 is an enlarged view schematically showing a configuration of the side dimple according to some embodiments of the present disclosure.

Referring to FIGS. 4 and 7, the side dimple 320 according to some embodiments may include a first side dimple 321, a second side dimple 322, and a third side dimple 323.

The first side dimple 321 may protrude from the side surface of the cooling body 100 toward the first channel 210. The first side dimple 321 may be formed by press working. An end of the first side dimple 321 may be arranged to be spaced apart from the partition wall 103 in the width direction of the first channel 210, that is, a direction parallel to the Y axis. The first side dimple 321 may be formed to become narrower toward the end. A side surface of the first side dimple 321 may have a curved shape. Hereinafter, a cross section of the first side dimple 321 perpendicular to the Z axis will be described as having an arc shape by way of example. However, the cross section of the first side dimple 321 perpendicular to the Z axis is not limited thereto, and the design may be changed to various shapes such as a polygonal, oval, and irregular shape. A plurality of first side dimples 321 may be provided. The plurality of first side dimples 321 may be arranged to be spaced apart from each other at intervals (e.g., set or predetermined intervals) in the longitudinal direction of the first channel 210.

The second side dimple 322 may protrude from the side surface of the cooling body 100 toward the second channel 220. The second side dimple 322 may be formed by press working. An end of the second side dimples 322 may be arranged to be spaced apart from the partition wall 103 in the width direction of the second channel 220, that is, a direction parallel to the Y axis. The second side dimple 322 may be formed to become narrower toward the end. A side surface of the second side dimple 322 may have a curved shape. Hereinafter, a cross section of the second side dimple 322 perpendicular to the Z axis will be described as having an arc shape by way of example. However, the cross section of the second side dimple 322 perpendicular to the Z axis is not limited thereto, and the design may be changed to various shapes such as a polygonal, oval, and irregular shape. A plurality of second side dimples 322 may be provided. The plurality of second side dimples 322 may be arranged to be spaced apart from each other at intervals (e.g., set or predetermined intervals) in the longitudinal direction of the second channel 220.

The third side dimple 323 may protrude from the side surface of the cooling body 100 toward the third channel 230. The third side dimple 323 may be formed by press working. An end of the third side dimples 323 may be arranged to be spaced apart from the end of the partition wall 103 in the width direction of the third channel 230, that is, a direction parallel to the X axis. The third side dimple 323 may be formed to become narrower toward the end. A side surface of the third side dimple 323 may have a curved shape. Hereinafter, a cross section of the third side dimple 323 perpendicular to the Z axis will be described as having an arc shape by way of example. However, the cross section of the third side dimple 323 perpendicular to the Z axis is not limited thereto, and the design may be changed to various shapes such as a polygonal, oval, and irregular shape. A plurality of third side dimples 323 may be provided. The plurality of third side dimples 323 may be arranged to be spaced apart from each other at intervals (e.g., set or predetermined intervals) in the longitudinal direction of the third channel 230.

The cross-sectional area of the third side dimple 323 may be smaller than the cross-sectional areas of the first side dimple 321 and the second side dimple 322. For example, a distance L3 between the end of the third side dimple 323 and the side surface of the cooling body 100 may be shorter than a distance L2 between the end of the first side dimple 321 and the side surface of the cooling body 100. The distance L2 between the end of the first side dimple 321 and the side surface of the cooling body 100 may be equal to the distance between the end of the second side dimple 322 and the side surface of the cooling body 100. For example, the distance L3 between the end of the third side dimple 323 and the side surface of the cooling body 100 may be about 5 mm, and the distance L2 between the end of the first side dimple 321 and the side surface of the cooling body 100 may be about 10 mm. Accordingly, the third side dimple 323 may further increase the flow velocity of the coolant in the third channel 230, thereby leading the coolant to more quickly change the flow direction.

Hereinafter, operations of the cooling plate 30 according to some embodiments of the present disclosure will be described.

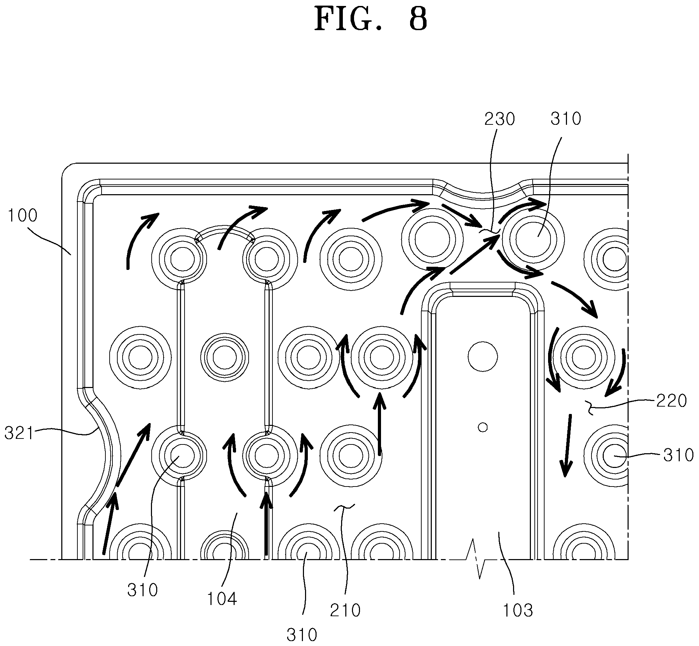

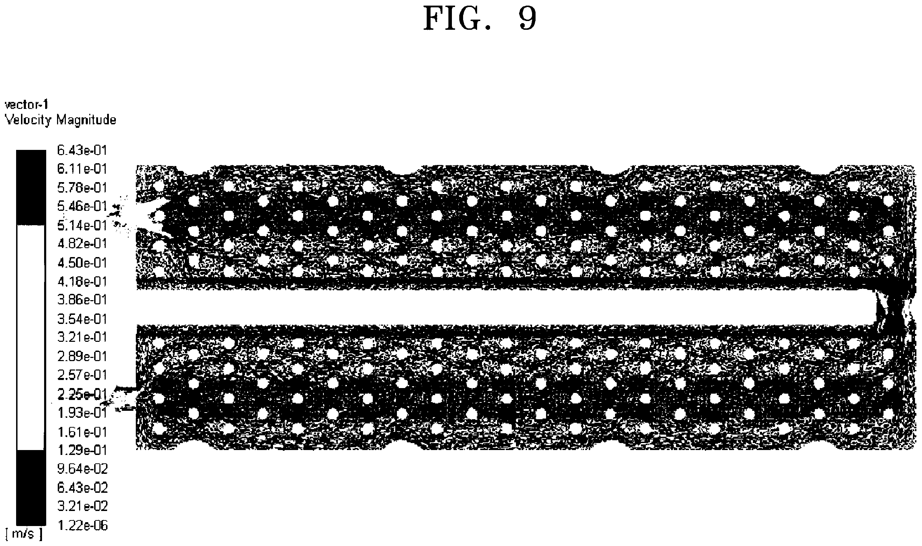

FIG. 8 is a view schematically showing an operating state of the cooling plate according to some embodiments of the present disclosure, and FIG. 9 is a view showing results of simulating the operating state of the cooling plate according to some embodiments of the present disclosure using a computational fluid dynamics technique.

Referring to FIGS. 8 and 9, the coolant supplied through the first port 101 is dispersed to both sides in the width direction of the first channel 210 at the front end of the first channel 210 by the first land portion 104.

Then, the coolant comes into contact with the main dimple 310 while flowing in the first direction along the first channel 210 and is dispersed to both sides of the main dimple 310.

As the main dimples 310 are arranged in a plurality of columns in the longitudinal direction of the first channel 210 and the main dimples 310 arranged in neighboring columns are arranged to be offset in the width direction of the first channel 210, dispersion of the coolant by the main dimples 310 may be repeatedly performed over the entire area of the first channel 210.

The coolant flowing toward the interface between the cooling body 100 and the first channel 210 collides with the first side dimple 321 and the flow direction is changed to a direction away from the interface between the cooling body 100 and the first channel 210.

Then, the coolant flowing to the rear end of the first channel 210 is introduced into the front end of the second channel 220 through the third channel 230, and the flow direction is changed from the first direction to the second direction.

The coolant flows along the third channel 230, comes into contact with the main dimple 310, and is dispersed to both sides of the main dimple 310.

The coolant flowing toward the interface between the cooling body 100 and the third channel 230 collides with the third side dimple 323 and the flow direction is changed to a direction away from the interface between the cooling body 100 and the third channel 230.

Meanwhile, as the width of the third channel 230 is formed to be narrower than the width of the first channel 210 and the cross-sectional area of the third side dimple 323 is formed to be smaller than the cross-sectional area of the first side dimple 321, it can be confirmed that the flow velocity of coolant increases in the third channel 230.

The coolant introduced into the front end of the second channel 220 through the third channel 230 is dispersed to both sides in the width direction of the second channel 220 by the second land portion 105.

Then, the coolant comes into contact with the main dimple 310 while flowing in the second direction along the second channel 220 and is dispersed to both sides of the main dimple 310.

As the main dimples 310 are arranged in a plurality of columns in the longitudinal direction of the second channel 220 and the main dimples 310 arranged in neighboring columns are arranged to be offset in the width direction of the second channel 220, dispersion of the coolant by the main dimples 310 may be repeatedly performed over the entire area of the second channel 220.

The coolant flowing toward the interface between the cooling body 100 and the second channel 220 collides with the second side dimple 322 and the flow direction is changed to a direction away from the interface between the cooling body 100 and the second channel 220.

Then, the coolant flowing to the rear end of the second channel 220 is discharged to the outside of the cooling body 100 through the second port 102.

Hereinafter, the present disclosure will be described in more detail through specific examples of the cooling plate 30. The following examples are merely examples to aid understanding of the present disclosure, and the scope of the present disclosure is not limited thereto.

### Example 1

A cooling plate 30 with a main dimple 310 whose maximum width L1 is 17.66 mm was manufactured.

### Example 2

A cooling plate 30 in which the maximum width L1 of the main dimple 310 in Example 1 was changed to 10 mm was manufactured.

### Example 3

A cooling plate 30 in which the maximum width L1 of the main dimple 310 in Example 1 was changed to 20 mm was manufactured.

### Experiment Example 1

Results of a flow analysis experiment performed while supplying a coolant to the cooling plate 30 according to each example at flow rates of 0.5 lpm, 1 lpm, and 1.5 Ipm are shown in Tables 1 to 3 below.

**Table 1**

| 0.5 Ipm | Average flow velocity (m/s) | Average vorticity (1/s) | Pressure drop (Pa) | Average turbulent kinetic energy (m²/s²) |
|---|---|---|---|---|
| Example 1 | 0.025 | 12.25 | 155.76 | 0.0001 |
| Example 2 | 0.02 | 16.03 | 130.35 | 0.00008 |
| Example 3 | 0.02 | 14.55 | 117.61 | 0.00007 |

**Table 2**

| 1 Ipm | Average flow velocity (m/s) | Average vorticity (1/s) | Pressure drop (Pa) | Average turbulent kinetic energy (m²/s²) |
|---|---|---|---|---|
| Example 1 | 0.051 | 40.54 | 436.3 | 0.00029 |
| Example 2 | 0.04 | 31.05 | 313.22 | 0.00021 |
| Example 3 | 0.04 | 29.06 | 333.19 | 0.00019 |

**Table 3**

| 1.5 Ipm | Average flow velocity (m/s) | Average vorticity (1/s) | Pressure drop (Pa) | Average turbulent kinetic energy (m²/s²) |
|---|---|---|---|---|
| Example 1 | 0.077 | 60.45 | 845.31 | 0.00054 |
| Example 2 | 0.07 | 48.12 | 722.66 | 0.00044 |
| Example 3 | 0.07 | 42.99 | 634.41 | 0.00036 |

Referring to Tables 1 to 3, except that the average vorticity of Example 2 at 0.5 Ipm is higher than that of Example 1, the average flow velocity, average vorticity, pressure drop, and average turbulence kinetic energy (TKE) of Example 1 were measured to be generally higher than those of Examples 2 and 3 in all flow rate sections. Accordingly, it can be confirmed that the heat exchange efficiency of Example 1 is superior to those of Example 2 and Example 3.

The insulating member 40 electrically insulates the housing 20 and the battery cells 10. That is, the insulating member 40 may function as a component that secures a sufficient insulating distance between the housing 20 and the battery cells 10.

FIG. 10 is a cross-sectional view schematically showing a configuration of the insulating member according to some embodiments of the present disclosure.

Referring to FIGS. 1 and 10, the insulating member 40 according to some embodiments may include an insulating body 41 and a support member 42.

The insulating body 41 may be formed to have a substantially flat shape and located between the battery cells 10 and the cooling plate 30. The insulating body 41 may be made of an electrically insulating synthetic resin material. An upper surface of the insulating body 41 may be in contact with the lower surfaces of the battery cells 10, and a lower surface of the insulating body 41 may be in contact with the upper surface of the cooling body 100. A thickness of the insulating body 41 may be designed in various ways depending on the insulating distance between the bottom plate 21 of the housing 20 and the battery cells 10.

In the insulating body 41, a plurality of first through holes 41a and a plurality of second through holes 41b passing through the insulating body 41 up and down may be formed.

The plurality of first through holes 41a may be arranged to be spaced apart from each other in a longitudinal direction of the insulating body 41, that is, the X-axis direction. The number of the plurality of first through holes 41a may be equal to the number of first battery cells 11. Each first through hole 41a may be located in the insulating body 41 at a position facing a corresponding first battery cell 11.

The plurality of second through holes 41b may be arranged to be spaced apart from each other in the longitudinal direction of the insulating body 41, that is, the X-axis direction. Each second through hole 41b may be arranged to be spaced apart from a corresponding first through hole 41a in a width direction of the insulating body 41, that is, the Y-axis direction. The number of the plurality of second through holes 41b may be equal to the number of second battery cells 12. Each second through hole 41b may be located in the insulating body 41 at a position facing a corresponding second battery cell 12.

The support member 42 extends from the insulating body 41 and supports the insulating body 41 with respect to the housing 20. The support member 42 according to some embodiments may extend from the lower surface of the insulating body 41 toward the bottom plate 21. As the area of the cooling body 100 is formed to be smaller than the sum of the areas of the lower surfaces of the plurality of battery cells 10, the support member 42 may be in direct contact with the upper surface of the bottom plate 21 of the housing 20. The support member 42 may be made of the same material as the insulating body 41.

The sheet 50 may be located inside the first through hole 41a and the second through hole 41b.

The sheet 50 may serve to relatively reduce the tolerance formed between the battery cell 10 and the cooling plate 30 (e.g., as much as possible) due to the thickness of the insulating body 41 itself.

The sheet 50 according to some embodiments may include a first sheet 51 and a second sheet 52.

The first sheet 51 and the second sheet 52 may be made of a material that is elastically deformable and has high thermal conductivity, such as silicone. The first sheet 51 and the second sheet 52 may be located inside the first through hole 41a and the second through hole 41b, respectively. The first sheet 51 and the second sheet 52 may be formed in numbers corresponding to the first through holes 41a and the second through holes 41b, respectively. Upper and lower surfaces of the first sheet 51 may be in contact with the lower surfaces of the first battery cells 11 and the upper surface of the cooling body 100, respectively. Upper and lower surfaces of the second sheet 52 may be in contact with the lower surfaces of the second battery cells 12 and the upper surface of the cooling body 100, respectively.

According to some embodiments of the present disclosure, by continuously dispersing a flow direction of a coolant flowing through a cooling channel, uniform cooling performance can be secured over the entire area of a cooling plate, and temperature deviation between a plurality of battery cells can be prevented.

According to some embodiments of the present disclosure, a coolant can be prevented from concentrating on an interface between a cooling channel and a cooling body due to a centrifugal force.

According to some embodiments of the present disclosure, by increasing a flow velocity of a coolant flowing through a third channel relative to that of first and second channels, a flow direction of the coolant can be more quickly changed.

According to some embodiments of the present disclosure, by securing an insulating distance between the housing and the battery cell using an insulating member, safety accidents due to short circuits and the like can be prevented.

However, the effects obtainable through the present disclosure are not limited to the above effects, and other technical effects that are not mentioned will be clearly understood by those skilled in the art from the preceding description of the present disclosure.

While aspects of some embodiments of the present disclosure have been described with reference to embodiments shown in the drawings, these embodiments are merely illustrative and it should be understood that various modifications and equivalent other embodiments can be derived by those skilled in the art on the basis of the embodiments.

Embodiments are set out in the following clauses:
1. A cooling plate comprising:
   a cooling body;
   a cooling channel inside the cooling body and configured to guide a flow of a coolant; and
   a dispersion member inside the cooling channel and configured to disperse the flow of the coolant through the cooling channel.
2. The cooling plate according to clause 1, wherein the cooling channel comprises:
   a first channel configured to guide the flow of the coolant in a first direction;
   a second channel spaced apart from the first channel and configured to guide the flow of the coolant in a second direction different from the first direction; and
   a third channel connected to the first channel and the second channel and configured to change the flow of the coolant from the first direction to the second direction.
3. The cooling plate according to clause 2, wherein the cooling body comprises:
   a first land portion protruding inside the first channel and extending in the first direction; and
   a second land portion protruding inside the second channel and extending in the second direction.
4. The cooling plate according to clause 3, wherein the first land portion is arranged so that an end thereof faces a first port that supplies the coolant to the first channel, and
   the second land portion is arranged so that an end thereof faces a second port that discharges the coolant from the second channel.
5. The cooling plate according to clause 2, 3 or 4, further comprising a partition wall between the first channel and the second channel and dividing the first channel and the second channel.
6. The cooling plate according to any one of clauses 2 to 5, wherein the third channel extends in a direction intersecting the first direction and the second direction.
7. The cooling plate according to clause 5, or clause 6 when dependent on clause 5, wherein the third channel faces an end of the partition wall.
8. The cooling plate according to any one of clauses 2 to 7, wherein the dispersion member comprises a plurality of main dimples protruding toward the cooling channel from any one of a bottom surface and a ceiling surface of the cooling body.
9. The cooling plate according to clause 8, wherein ends of the main dimples contact a remaining one of the bottom surface and the ceiling surface of the cooling body.
10. The cooling plate according to clause 8 or 9, wherein a cross-sectional area of the main dimple decreases toward an end.
11. The cooling plate according to clause 8, 9 or 10, wherein the dispersion member further comprises a side dimple protruding from a side surface of the cooling body toward the cooling channel.
12. The cooling plate according to clause 11, wherein the side dimple comprises:
   a first side dimple protruding from the side surface of the cooling body toward the first channel;
   a second side dimple protruding from the side surface of the cooling body toward the second channel; and
   a third side dimple protruding from the side surface of the cooling body toward the third channel.
13. A battery module comprising:
   a plurality of battery cells;
   a housing surrounding the battery cells;
   a cooling plate comprising a cooling body between the housing and the battery cells, a cooling channel guiding a flow of a coolant inside the cooling body, and a dispersion member inside the cooling channel and configured to disperse the flow of the coolant through the cooling channel; and
   an insulating member that electrically insulates the housing and the battery cells.
14. The battery module according to clause 13, wherein the plurality of battery cells comprise:
   a plurality of first battery cells in a first direction; and
   a plurality of second battery cells spaced apart from the first battery cells and arranged along a second direction different from the first direction, and
   the cooling channel comprises:
      a first channel configured to guide the flow of the coolant in the first direction and facing the first battery cells;
      a second channel configured to guide the flow of the coolant in the second direction and facing the second battery cells; and
      a third channel connected to the first channel and the second channel and configured to change the flow of the coolant from the first direction to the second direction.
15. The battery module according to clause 13 or 14, wherein the insulating member comprises:
   an insulating body between the battery cells and the cooling plate; and a support member extending from the insulating body and supporting the insulating body with respect to the housing.

## Claims

1. A cooling plate comprising:
a cooling body;
a cooling channel inside the cooling body and configured to guide a flow of a coolant; and
a dispersion member inside the cooling channel and configured to disperse the flow of the coolant through the cooling channel.

2. The cooling plate as claimed in claim 1, wherein the cooling channel comprises:
a first channel configured to guide the flow of the coolant in a first direction;
a second channel spaced apart from the first channel and configured to guide the flow of the coolant in a second direction different from the first direction; and
a third channel connected to the first channel and the second channel and configured to change the flow of the coolant from the first direction to the second direction.

3. The cooling plate as claimed in claim 2, wherein the cooling body comprises:
a first land portion protruding inside the first channel and extending in the first direction; and
a second land portion protruding inside the second channel and extending in the second direction.

4. The cooling plate as claimed in claim 3, wherein the first land portion is arranged so that an end thereof faces a first port that is configured to supply the coolant to the first channel, and
the second land portion is arranged so that an end thereof faces a second port that is configured to discharge the coolant from the second channel.

5. The cooling plate as claimed in claim 2, 3 or 4, further comprising a partition wall between the first channel and the second channel and dividing the first channel and the second channel.

6. The cooling plate as claimed in any one of claims 2 to 5, wherein the third channel extends in a direction intersecting the first direction and the second direction.

7. The cooling plate as claimed in claim 5, or claim 6 when dependent on claim 5, wherein the third channel faces an end of the partition wall.

8. The cooling plate as claimed in any one of claims 2 to 7, wherein the dispersion member comprises a plurality of main dimples protruding toward the cooling channel from any one of a bottom surface and a ceiling surface of the cooling body.

9. The cooling plate as claimed in claim 8, wherein ends of the main dimples contact a remaining one of the bottom surface and the ceiling surface of the cooling body.

10. The cooling plate as claimed in claim 8 or 9, wherein a cross-sectional area of each main dimple decreases toward an end.

11. The cooling plate as claimed in claim 8, 9 or 10, wherein the dispersion member further comprises a side dimple protruding from a side surface of the cooling body toward the cooling channel.

12. The cooling plate as claimed in claim 11, wherein the side dimple comprises:
a first side dimple protruding from the side surface of the cooling body toward the first channel;
a second side dimple protruding from the side surface of the cooling body toward the second channel; and
a third side dimple protruding from the side surface of the cooling body toward the third channel.

13. A battery module comprising:
a plurality of battery cells;
a housing surrounding the battery cells;
a cooling plate as claimed in any preceding claim, wherein the cooling body is between the housing and the battery cells; and
an insulating member that electrically insulates the housing and the battery cells.

14. The battery module as claimed in claim 13 when dependent on claim 2 or any claim dependent on claim 2, wherein the plurality of battery cells comprise:
a plurality of first battery cells in the first direction; and
a plurality of second battery cells spaced apart from the first battery cells and arranged along the second direction, and
wherein:
the first channel faces the first battery cells; and
the second channel faces the second battery cells.

15. The battery module as claimed in claim 13 or 14, wherein the insulating member comprises:
an insulating body between the battery cells and the cooling plate; and
a support member extending from the insulating body and supporting the insulating body with respect to the housing.
